# EUROPÄISCHE PATENTSCHRIFT

(11) **EP 2 994 314 B1**
(45) Veröffentlichungstag und Bekanntmachung des Hinweises auf die Patenterteilung: **18.10.2017**
(21) Anmeldenummer: 14721210.4
(22) Anmeldetag: 28.04.2014
(51) Int. Cl.: B42D 15/00, B42D 25/00

(54) **DATENSEITE FÜR PASSBUCH, VERBINDUNGSFOLIE DAFÜR UND HERSTELLUNGSVERFAHREN**
DATA PAGE FOR PASSPORT, CONNECTING FOIL THEREFOR AND MANUFACTURING METHOD
PAGE DE DONNÉES POUR PASSEPORT, FEUILLE DE LIAISON ASSOCIÉE ET PROCÉDÉ DE FABRICATION

(30) Priorität: 06.05.2013 DE 102013007764; 21.03.2014 DE 102014004097
(43) Veröffentlichungstag der Anmeldung: 16.03.2016
(73) Patentinhaber: Giesecke+Devrient Mobile Security GmbH, 81677 München (DE)
(72) Erfinder: BOHN, Carsten, 81667 München (DE); ANGERER, Johann, 83714 Miesbach (DE); RIEDL, Josef, 85395 Attenkirchen (DE); AURACHER, Ulrich, 83607 Holzkirchen (DE); RUHLAND-BAUER, Michael, 89195 Staig (DE); SCHRÖPPEL, Frank, 85649 Brunnthal (DE)
(86) Internationale Anmeldenummer: PCT/EP2014/001130
(87) Internationale Veröffentlichungsnummer: WO 2014/180542

(56) Entgegenhaltungen:
- EP-A1- 0 549 357
- EP-A1- 1 502 765
- DE-A1-102004 055 495

## Beschreibung

Die Erfindung betrifft einen mehrschichtigen Datenträger mit einem biegsamen Befestigungsbereich. Insbesondere betrifft die Erfindung eine Datenseite für ein Passbuch, die an einer Randseite eine vorspringende Lasche zur Befestigung der Datenseite in einem Passbuch aufweist. Weiter betrifft die Erfindung ein entsprechendes Herstellungsverfahren.

Aus der EP 1 502 765 B2 ist eine Datenseite, gemäß dem Oberbegriff des Anspruchs 1, für ein Passbuch bekannt, die aus zwei Kunststoffschichten besteht, zwischen die eine flexible textile Schicht einlaminiert ist. Das Material der Kunststoffschicht verbindet sich dabei durch die Maschenöffnungen der Textilschicht hindurch, so dass die Textilschicht fest zwischen die Kunststoffschichten eingebunden wird. Ein Teil der Textilschicht steht aus der Datenseite hervor und dient als Befestigungsbereich zur Befestigung der der Datenseite in einem Passbuch.

Aus der EP 1 812 244 B1 ist weiter eine Datenseite bekannt, die aus einer Kernlage besteht, die bis auf einen Überstand beidseitig mit weiteren Kunststoffschichten verbunden ist. Der Überstand dient zur Befestigung der Datenseite in einem Passbuch. Die Kernlage basiert auf einem textilen Material und ist biegsam. Die Kernlage ist selbst mehrschichtig ausgeführt, wobei die zentrale Textilschicht beidseitig mit Haftvermittlerschichten bedeckt ist. Die Kernlage kann gelaserte oder gestanzte Aussparungen aufweisen, durch die hindurch die umgebenden Kunststoffschichten der Vorderseite und der Rückseite einen Schmelzverbund untereinander bilden. Die Aussparungen können kreisrund, oval oder eckig sein. In der Kernlage ist zudem ein RFID-Element angeordnet. Um das RFID-Element aufnehmen zu können, muss die Kernlage ausreichend dick sein. Zugleich muss sie ausreichend steif sein, um in Verbindung mit den anliegenden Kunststoffschichten der Vorderseite und der Rückseite das RFID-Element hinreichend gegen Biegebeanspruchungen zu schützen. Beide Anforderungen stehen der für den Bereich des Überstandes gewünschten hohen Biegsamkeit entgegen. Die notwendige Dicke der Kernschicht erschwert auch die praktische Umsetzung der vorgeschlagenen Ausnehmungen zur Verbesserung des Zusammenhalts der Kernschicht mit den umgebenden Kunststoffschichten. Denn aufgrund der resultierenden großen Tiefe der Ausnehmungen entsteht bei kleindimensionierten Ausnehmungen die Gefahr, dass der beabsichtigte Schmelzverbund gerade nicht eintritt. Bei ausreichend groß dimensionierten Ausnehmungen besteht dagegen die Gefahr, dass diese sich nachteilig auf das Oberflächenerscheinungsbild der Datenseite auswirken. Sofern verteilt über die Fläche der Datenseite nur wenige zapfenartige Schmelzverbünde geschaffen werden, verbessern sie die Sicherheit der Datenseite gegen ein Auftrennen der einzelnen Schichten zudem höchstens unwesentlich. Ein typischer derartiger Angriff wird ausgehend von dem Überstand geführt, mit dem Ziel die Kunststoffschichten der Vorderseite oder der Rückseite von der Kernschicht zu trennen.

Es ist Aufgabe der Erfindung, eine Datenseite anzugeben, die einen wirksamen Schutz gegen Auftrennen der einzelnen Schichten bei einem Angriff von dem Befestigungsbereich her bietet.

Diese Aufgabe wird gelöst durch eine Datenseite mit den Merkmalen des Hauptanspruchs. Sie wird weiterhin gelöst durch ein Verfahren zum Herstellen einer flexiblen laminierbaren Verbindungsfolie sowie eine Verbindungsfolie für Datenträger gemäß den unabhängigen Ansprüchen.

Die Erfindung beruht auf der Erkenntnis, dass die Trennung einer Kunststoffschicht von einem vorspringenden Befestigungsstreifen erheblich erschwert wird, wenn im Befestigungsstreifen zur Herstellung eines durchgreifenden Schmelzverbundes Ausnehmungen mit komplexen Grundrissen vorgesehen und nahe der Randlinie angeordnet werden, an der der Befestigungsstreifen aus der Datenseite vorspringt.

Die erfindungsgemäße Datenseite hat den Vorteil, dass sie ohne wesentlichen Mehraufwand herstellbar ist. Die besondere Geometrie der Ausnehmungen führt dazu, dass eine saubere Trennung einer Kunststoffschicht von einem Befestigungsstreifen unter Verwendung mechanischer Mittel nicht mehr möglich ist. Bei einem Trennungsversuch kommt es stets zu Abrissen des Befestigungsstreifens, so dass Teile des Befestigungsstreifens an der oberen abgetrennten Kunststoffschicht und/ oder andere Teile an der unteren abgetrennten Kunststoffschicht verbleiben. Eine Wiedervereinigung der getrennten Teile insbesondere mit getrennten Teilen von anderen Datenseiten ist dadurch kaum noch möglich. Die Sicherheit der erfindungsgemäßen Datenseite gegen Fälschungen insbesondere durch Verbinden von ursprünglich nicht verbundenen Teilen wird dadurch erheblich verbessert.

In besonders vorteilhafter Weise kann der Grundriss der Ausnehmung so gestaltet sein, dass er ein Logo, ein Symbol oder eine Folge von alphanumerischen Zeichen darstellt. Auf diese Weise bildet die Ausnehmung ein Sicherheitselement, das die Unversehrtheit einer Datenseite nachweist. In einer vorteilhaften Ausgestaltung weist die Ausnehmung eng nebeneinander liegende, schmale, längliche Strukturen nach Art eines Kammes auf. Diese lassen sich bei einem mechanischen Angriff besonders schwer gleichförmig und reversibel trennen. Vorteilhaft kann ferner vorgesehen sein, dass zumindest ein Bereich einer Ausnehmung in einer Spitze ausläuft, die in Richtung auf die Randlinie zwischen Datenseite und vorspringendem Befestigungsstreifen weist. Eine solche Gestaltung der Ausnehmung erschwert zusätzlich ein sauberes reversibles Trennen.

Eine zusätzliche Sicherheit gegen den Ansatz eines Trennens mit dem Ziel einer späteren Rekombination mit anderen Teile läßt sich erreichen, indem die Grundrisse in Form von an- oder absteigenden Ziffernfolgen oder in Form von sich chaotisch verändernden Buchstaben gestaltet werden, wie man sie in Nummernkreisen von Seriennummern findet. Selbst wenn ein hinreichend gutes Trennen dann gelänge, wären getrennte Teile verschiedener Datenseiten in keinem Falle kombinierbar.

In einer weiteren vorteilhaften Variante besitzen die Ausnehmungen in Grundrisse in Form von einfachen geometrischen Grundfiguren, die eine eindeutige Ausrichtung zulassen. Die Ausnehmungen sind dann bevorzugt in Form einer Matrix angeordnet, in der jeweils zwei benachbarte Ausnehmungen unterschiedlich ausgerichtet sind. Beispielsweise können die Ausnehmungen die Form von rechtwinklig zueinander verschränkten Ellipsen haben. Um eine auf diese Weise ausgestattete Datenseite sauber zu trennen, müssten längs zur Randlinie ausgerichtete Ausnehmungen anders angegangen werden als quer zur Randlinie ausgerichtete. Infolge der in Längs- und Querrichtung der Matrix alternierenden Anordnung von hochstehenden und querstehenden Ellipsen ist eine mechanische Trenneinwirkung, die beiden Ellipsenausrichtungen gerecht wird, praktisch nicht realisierbar.

In einer vorteilhaften Ausgestaltung der erfindungsgemäßen Datenseite basiert der Befestigungsstreifen auf einer textilen Kernschicht, die beschichtet ist, so dass die Maschenöffnungen der Textilschicht verschlossen sind. Das Verschließen der Maschenöffnungen kann so in vorteilhafter Weise vorab sichergestellt werden. Die Gefahr, dass beim Einlaminieren zwischen die Kunststoffschichten der Datenseite einige der Maschenöffnungen nicht ausreichend geschlossen werden und damit ein kritischer Angriffspunkt entfallen damit.

Unter Bezugnahme auf die Zeichnung wird nachfolgend ein Ausführungsbeispiel der Erfindung näher erläutert.

Es zeigen:
- Fig. 1: eine Aufsicht auf eine Datenseite mit einem Befestigungsstreifen,
- Fig. 2: einen Querschnitt durch eine Datenseite in dem Randbereich mit dem Befestigungsstreifen,
- Fig. 3: einen Querschnitt durch einen Befestigungsstreifen,
- Fig. 4: ein Flußdiagramm der Herstellung einer mit Ausnehmungen versehenen Verbindungsfolie für eine Datenseite,
- Fig. 5: eine perspektivische Darstellung des Aufbaus der Verbindungsfolie,
- Fig. 6: das Lasern einer Verbindungsfolie zur Erzeugung einer komplexen Ausnehmung,
- Fig. 7: beispielhafte Gestaltungen der Ausnehmungen.
- Fig. 8: das Verhalten einer Datenseite bei einem Trennversuch,
- Fig. 9: eine Anlage zum Zu- und Einschneiden von Verbindungsfolien.

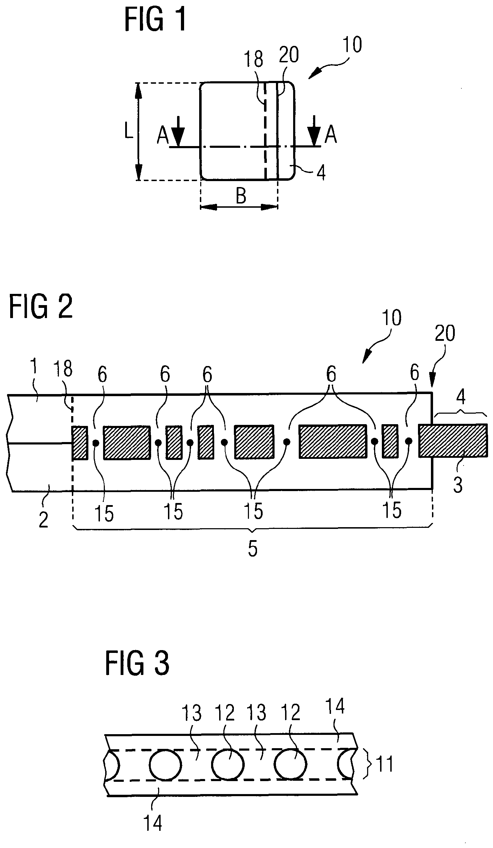

Fig. 1 zeigt eine Aufsicht auf eine Datenseite 10 mit einem Befestigungsstreifen 3, der an einer Randseite der Datenseite 10 entlang einer Seitenrandlinie 20 vorspringt und einen biegsamen Befestigungsbereich 4 bildet. Die Datenseite 10 ist typischerweise eine Datenseite für ein Passbuch, d.h. sie trägt Personalisierungsinformation, die sie einem Nutzer eindeutig zuordnet. Die Personalisierungsinformation umfaßt in der Regel Fotos, alphanumerische Zeichen und/ oder biometrische Daten. Die Datenseite kann mit einem IC und einer Schnittstelle für einen elektronischen Zugriff darauf ausgestattet sein. Eine standardisierte Definition eines Passbuchs und einer Datenseite finden sich z.B. in dem ICAO Standard 9303 (http://www.icao.int/publications/pages/publication.aspx?docnum=9303).

Fig. 2 zeigt einen Querschnitt durch eine Datenseite entlang der Linie A-A im Randbereich an der Seite, an der der Befestigungsstreifen 3 liegt. Die Datenseite 10 besteht aus mindestens zwei Kunststoffschichten 1, 2. Zwischen den Kunststoffschichten 1, 2 ist der Befestigungsstreifen 3 angeordnet, der entlang der Seitenrandlinie 20 gegenüber der Datenseite 10 hervorsteht und den Befestigungsbereich 4 bildet. In einer praktischen Ausführungsform erstreckt sich der Befestigungsstreifen 3 bis zu einer Innenendlinie 18 in die Datenseite 10 hinein. Die Datenseite 10 ist typischerweise rechteckförmig, d.h. sie besitzt zwei Hauptachsen und hat eine Breite B und eine Länge L; andere Geometrien sind aber ebenso möglich.

Der Befestigungsstreifen 3 ist in Form einer flexiblen laminierbaren Verbindungsfolie bereitgestellt; er wird im weiteren Verbindungsfolie 3 genannt.

Die beiden Kunststoffschichten 1, 2 stehen stellvertretend für eine Kunststoffschichtenfolge oberhalb der Verbindungsfolie 3 und unterhalb der Verbindungsfolie 3. Die Kunststoffschichten 1, 2 können jeweils aus einer oder mehreren Teilschichten aufgebaut sein.

Im Befestigungsbereich 4 wird die Datenseite 10 mit einem Halter, z.B. einem Passbuch verbunden, typischerweise durch Nähen. Andere Befestigungsarten sind aber ebenso möglich; auch kann die Datenseite 10 an einem anderen Halter als einem Passbuch verbunden werden, etwa an einem Kleidungsstück.

Die Verbindungsfolie 3 besitzt neben dem vorspringenden Befestigungsbereich 4 einen innenliegenden Teil 5, der sich mit den Kunststoffschichten 1, 2 überlappt. Der so gebildete Überlappungsbereich 5 erstreckt sich typischerweise über 5 bis 50%, zweckmäßig über 8 bis 15%, der Breite B in die Datenseite 10 und endet an der Innenendlinie 18. Gängige Passbücher haben Abmessungen von ca. 88 x 125 mm; der innenliegende Teil 5 der Verbindungsfolie 3 erstreckt sich dann typischerweise zwischen 5 und 40 mm tief in das Passbuch 10, zweckmäßig zwischen 6 und 10 mm. Der vorspringende Befestigungsbereich 4 hat typischerweise eine Breite von 8 bis 40 mm, zweckmäßig 8 bis 15 mm.

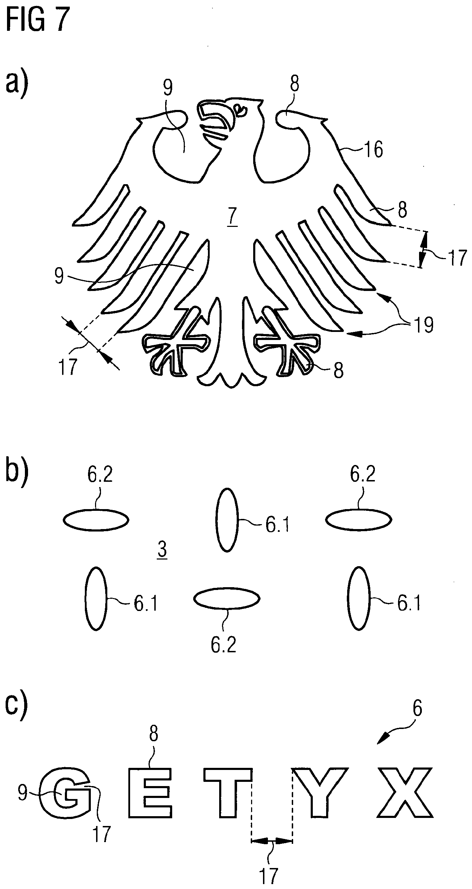

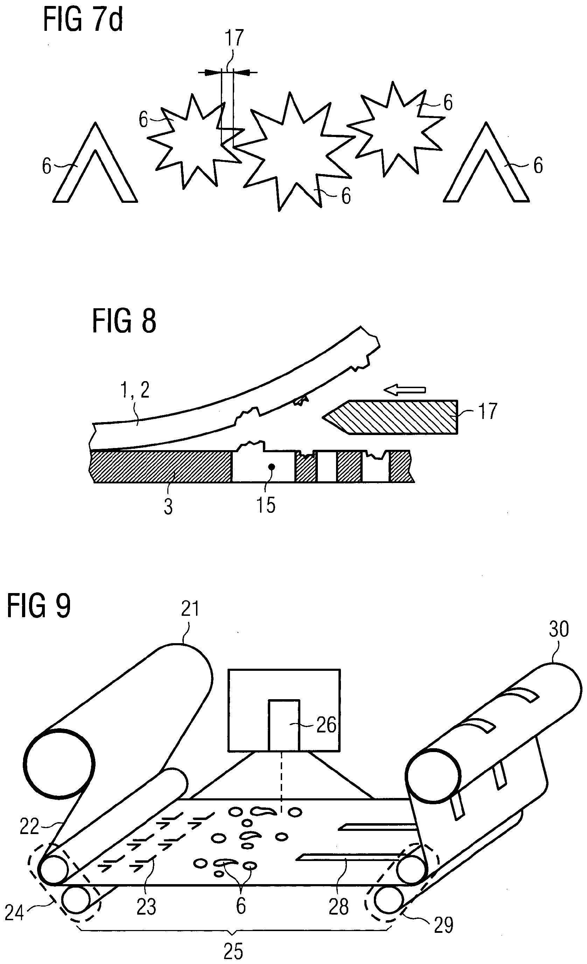

Die Verbindungsfolie 3 weist eine Mehrzahl von Ausnehmungen 6 auf. Diese können - wie in Fig. 7 angedeutet - unterschiedliche Grundrisse besitzen und weisen im Querschnitt - wie in Fig. 2 gezeigt - entsprechend unterschiedliche Breiten auf. Zumindest eine Ausnehmung 6 ist nahe oder auf der Randlinie 20 angeordnet. Sie kann auch über die Seitenrandlinie 20 herausragen und sich in den Befestigungsbereich 4 hineinerstrecken. Zumindest eine Ausnehmung 6 besitzt in Aufsicht einen komplexen Grundriss, dessen Randlinie 16 durch einen Polygonzug und/ oder mithilfe von Kurven mit unterschiedlichen Radien beschrieben wird; oder zumindest zwei benachbarte Ausnehmungen besitzen in Aufsicht gerichtete Grundrisse und sind unterschiedlich ausgerichtet. Die Gestaltung der Ausnehmungen wird nachfolgend noch näher erläutert.

Die Verbindung der Kunststoffschichten 1, 2 und der Verbindungsfolie 3 erfolgt durch Laminieren. Dabei dringt Kunststoffmaterial der Kunststoffschichten 1, 2 in und durch die Ausnehmungen 6 und verbindet sich in den Ausnehmungen 6 zu Stegen oder Zapfen 15, die durch die Verbindungsfolie 3 durchgreifen. Zugleich verbindet sich die Verbindungsfolie 3 außerhalb der Ausnehmungen 6 an seinen Oberflächen mit den angrenzenden Kunststoffschichten 1, 2. Insgesamt wird die Verbindungsfolie 3 auf diese Weise sehr fest mit den Kunststoffschichten 1, 2 verbunden.

Die Verbindungsfolie 3 ist, wie in Fig. 3 angedeutet, bevorzugt selbst aus mehreren Schichten aufgebaut. Besonders zweckmäßig basiert sie auf einer Kernschicht 12 in Gestalt einer Textilschicht, die aus einem Gewebe 12 von Fäden besteht, zwischen denen Maschenöffnungen 13 liegen. Auf beiden Seiten ist die Textilschicht 11 mit einer Beschichtung 14 überzogen. Die Beschichtung 14 ist so aufgebracht, dass sie die Maschenöffnungen 13 auffüllt. Textilschicht 11 und Beschichtung 14 basieren zweckmäßig auf Kunststoffmaterialien. Insbesondere für die Textilschicht 11 sind aber auch andere Materialien, etwa Naturfasern, oder Mischungen nicht ausgeschlossen. In einer zweckmäßigen Ausführungsform sind Textilschicht 11 und Beschichtung 14 so gestaltet, dass das Gewichtsverhältnis Textilschicht:Beschichtung im Trockengewicht zwischen 70:30 und 50:50 liegt, vorzugsweise zwischen 60:40 und 50:50; besonders bevorzugt beträgt das Gewichtsverhältnis 60:40.

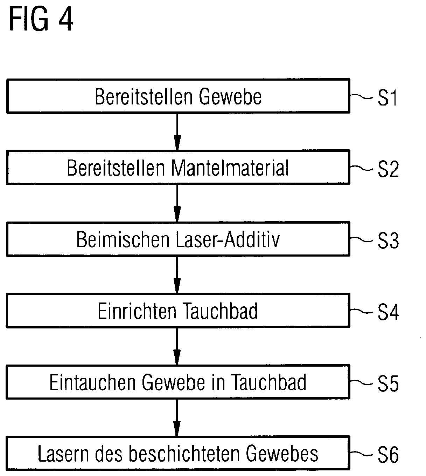

Die Beschichtung 14 kann z.B. in einem Tauchbad erzielt werden. Ein entsprechendes Verfahren zur Herstellung einer Verbindungsfolie 3 ist Fig. 4 dargestellt.

Die Verbindungsfolie 3 basiert dabei auf einem Gewebe 12 mit Fäden, zwischen denen Maschenöffnungen 13 liegen. Das Gewebe 12 basiert zweckmäßig auf einem Kunststoff, andere Materialien wie Naturfasern oder Mischungen damit sind aber grundsätzlich ebenfalls möglich. Für das Gewebe 12 geeignet ist zum Beispiel PET oder ein anderer "technischer Kunststoff" wie PA, PEEK, PES oder PSU. Das Gewebematerial muss gut benetzbar sein, d.h. eine hohe Oberflächenspannung haben. Um das zu erreichen kann es zweckmäßig sein, das gewählte Material chemisch vorzubehandeln, zum Beispiel doch Ätzen, oder physikalisch, zum Beispiel durch eine Plasma-oder Corona-Behandlung. Zweckmäßig wird ein Gewebe 12 gewählt mit einer Fadendicke von 50 µm bis 120 µm; die Maschenöffnungen 13 haben zweckmäßig eine Weite von 20 µm bis 80 µm.

Die Bereitstellung des Gewebes 12 bildet den ersten Schritt S1 des Verfahrens zur Herstellung einer Verbindungsfolie 3 gemäß Fig. 4.

Das Gewebe 12 ist beidseitig mit einer Beschichtung 14 überzogen. Die Beschichtung 14 ist so aufgebracht, dass sie die Maschenöffnungen 13 verschließt. Die Aufbringung der Beschichtung 14 erfolgt in einem Tauchbad. In dem Tauchbad wird in einem Schritt S2 ein Mantelmaterial bereitgestellt, das vorzugsweise aus einem bei Raumtemperatur flüssigen Kunststoffgemisch besteht. Basismaterial des Kunststoffgemisches ist zum Beispiel Polyurethan, dass als Zweikomponentensystem oder als Einkomponentensystem vorliegt.

Dem flüssigen Kunststoffgemisch wird in Schritt S3 ein Laser-Additiv beigemischt. Das Laser-Additiv ist zum Beispiel ein Kupfermolybdän-Pigment, das in einer Konzentration von 0,1% bis 2,5%, vorzugsweise von 0,25% bis 0,5% beigemischt ist. Grundsätzlich kommen als Additiv solche Substanzen in Betracht, die Licht in dem Bereich absorbieren, in denen ein später zum Anlegen der Ausnehmungen 6 verwendeter Laser arbeitet.
Zur Herstellung der Verbindungsfolie 3 wird das Gewebe 12 in Schritt S4 in das Tauchbad eingetaucht, solange, dass sich die Maschenöffnungen 13 des Gewebes 12 schließen. Die Viskosität des Kunststoffgemisches wird entsprechend eingestellt. Typischerweise wird um die Fäden des Gewebes 12 eine Beschichtung 14 mit einer Stärke von 1 µm bis 10 µm aufgebaut. Die Beschichtung erfolgt zweckmäßig bei Raumtemperatur.
Zweckmäßig liegt das Gewichtsverhältnis Gewebe:Beschichtung im Trockengewicht zwischen 70:30 und 50:50, vorzugsweise zwischen 60:40 und 50:50; bevorzugt beträgt es 60:40.

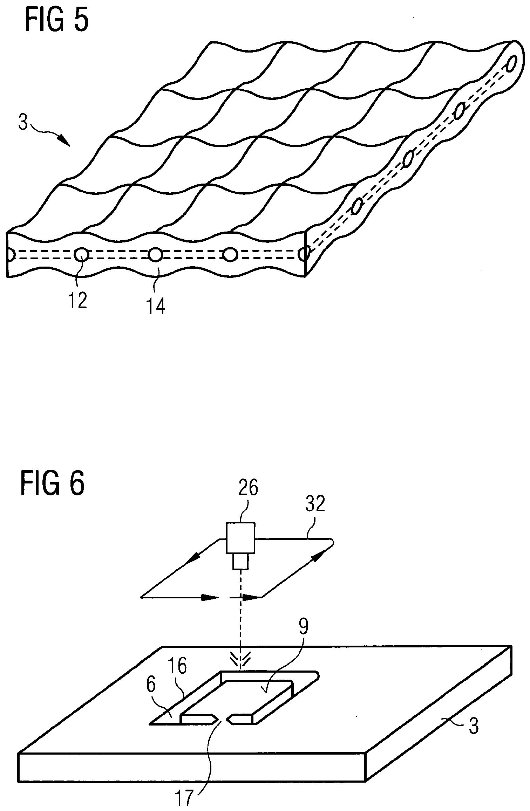

Fig. 5 veranschaulicht einen Ausschnitt eines beschichteten Gewebes 12 nach dem Beschichten zur Veranschaulichung des Aufbaus. Die angedeutete Strukturierung der Oberflächen ist nicht maßstabsgerecht. Aus dem beschichteten Gewebe 12 wird nachfolgend die Verbindungsfolie 3 erzeugt, indem die Ausnehmungen 6 eingebracht werden und das beschichtete Gewebe 12 zugeschnitten wird.
Dazu wird die Verbindungsfolie 3 nach dem Beschichten zum Zuschneiden bzw. Einschneiden in Schritt S6 einem Laser 26 zugeführt. Der Laser 26 kann z.B. Nd-YAG-Laser mit einer Wellenlänge von 1064 nm und einer Leistung von 20 W sein oder ein "grüner Laser" mit einer Wellenlänge von 532 nm oder ein UV-Laser mit einer Wellenlänge von 355 nm. Der Typ des Lasers 26 und die gewählten Laserparamter sind auf die in der Beschichtung 14 vorhandenen Laser-Additive und die verwendete Verbindungsfolie 3 bzw. das verwendete Gewebe 12 abgestimmt.

Fig. 6 veranschaulicht die Bewegung eines Lasers zur Erzeugung einer Ausnehmung 6. Der Laser 26 wird entlang einer Konturbahn 32 relativ zu der Verbindungsfolie 3 bewegt. Durch die Bewegung erzeugt der Laser 26 in der Verbindungsfolie 3 eine präzise Schnittlinie, entlang derer die Verbindungsfolie 3 durchtrennt wird. Der Trennvorgang wird durch die in der Beschichtung 14 vorhandenen Laser-Additive unterstützt. Die Schnittlinie bildet die Randlinie 16 einer Ausnehmung 6 und definiert deren Grundriss.

Wie in Fig. 6 angedeutet, kann die Randlinie 16 und damit der Grundriss der Ausnehmung 6 eine nahezu beliebige Kontur formen. Insbesondere können polygonzugartige Ausnehmungen 6 angelegt werden, die durchgängig oder an manchen Stellen eine sehr geringe Breite besitzen. Die minimale Breite kann in der Größenordnung der Maschenweite des Gewebes 12 liegen.

Die Ausnehmungen 6 können nicht geschlossene oder geschlossene Hüllkurven bilden. Es lassen sich beispielsweise eine Matrix aus feinen Polygon-oder Wellenlinien herstellen oder Freiformen wie Kreise oder Ovale. Wie in Fig. 6 angedeutet, ist es insbesondere möglich, eine Ausnehmung 6 so zu konturieren, dass sie in der Verbindungsfolie 3 eine gefangene Fläche 9 erzeugt, die mit dem umgebenden Hauptteil der Verbindungsfolie 3 nur über eine in Relation zur Länge der Randlinie 16 schmale Materialbrücke 17 verbunden ist. Der über der Materialbrücke 17 verbundene Teil der Verbindungsfolie 3, d.h. die gefangene Fläche 9, trägt nur in reduzierter Form zu der durch die Verbindungsfolie 3 erzeugten Befestigungswirkung bei.

Ohne weiteres sind auch Ausnehmungen 6 herstellbar, deren Grundrisse etwa eine Kamm- oder Gabelstruktur mit spitz auslaufenden Kamm- bzw. Gabelzähnen aufweisen. Ebenso ist eine Ausnehmung 6 mit einem Grundriss in Gestalt eines Wappentieres, etwa eines Adlers, herstellbar.

Anhand Fig. 7 wird die Gestaltung der Ausnehmungen 6 erläutert. Grundsätzlich sind die Ausnehmungen 6 so gestaltet, dass sich in dem Verbundsystem, das aus den Verbindungsflächen zwischen Verbindungsfolie 3 und Kunststoffschichten 1, 2 bzw. durch die Zapfen 15 gebildet wird, unter Belastung unterschiedliche mehrachsige Spannungszustände ausbilden.

Die Spannungszustände lassen sich mit den Gesetzmäßigkeiten der technischen Mechanik beispielsweise nach Mohr oder nach der Hypothese von Tresca für zähes Bauteilverhalten bestimmen. Demnach tritt in einem Materialverbund Fließgefahr ein, wenn die maximalen Spannungen im Verbundsystem einen Versagensgrenzwert aufweisen und die Schub- und Normalspannungen τₘₐₓ und sₘₐₓ im Verbundsystem zu groß werden. Das Verbundsystem versagt dann oder wird zumindest vorgeschwächt. Typischerweise sind die entstehenden Spannungen Funktionen aus den Materialkonstanten, den Oberflächendimensionen und Oberflächengegebenheiten, den äußeren anliegenden Kräften, sowie dem gegebenen Schlußsystem, das etwa Stoffschluß und Formschluß umfaßt.

Die in dem Verbundsystem bedingt durch das Vorhandensein der Ausnehmungen 6 entstehenden örtlich variierenden Spannungszustände führen zu entsprechenden örtlich variierenden Trennfestigkeiten. Zwischen den Kunststoffschichten 1, 2 direkt und den Kunststoffschichten 1, 2 und der Verbindungsfolie 3 entsteht auf diese Weise im Bereich der Ausnehmungen 6 eine Trennfestigkeitslandschaft, die im folgenden Haftkraftprofil genannt wird.

Typischerweise verbinden sich größere aneinandergrenzende Flächen unter Ausbildung eines homogenen Haftkraftprofils, das lediglich im Randbereich zur angrenzenden Fläche Unregelmäßigkeiten aufweist. Die resultierenden gleichmäßigen haftenden Verbindungsflächen lassen sich kontrolliert trennen, wenn einmal bekannt ist, wie eine Trennung erreicht werden kann.

Verbindungsflächen mit im Verhältnis zur eigentlichen Verbindungsfläche langen Randlinien verhalten sich dagegen in Bezug auf die Trennfestigkeit prekär und zeigen typischerweise unregelmäßige Haftkraftprofile; auch können bei solchen prekären Verbindungsflächen Unregelmäßigkeiten durch unvermeidliche Streuungen im Herstellungsprozess bemerkbar sein. Die Haftfestigkeit solcher prekärer Verbindungsflächen kann in Teilbereichen größer sein als die Reißfestigkeit der Verbindungsfolie 3 und in anderen Teilen kleiner. Bei der Trennung solcher prekären Verbindungsflächen treten Haftkraftspitzen und Haftkraftminima auf, die zu Abrissen der verbundenen Schichten führen.

Dies berücksichtigend sind die erfindungsgemäßen Ausnehmungen 6 so gestaltet, dass eine saubere Trennung einer der Kunststoffschichten 1, 2 von der Verbindungsfolie 3 derart, dass die getrennten Teile später wieder rekombinierbar sind, nicht möglich ist. Die Ausnehmungen 6 werden hierzu entweder jeweils an sich mit komplexen Grundrissen versehen. Unter einem komplexen Grundriss wird dabei ein Grundriss verstanden, dessen Randkontur zumindest teilweise durch einen Polygonzug und/ oder durch aufeinanderfolgende Kurvenabschnitte mit unterschiedlichen Kurvenparametern beschrieben wird.
Alternativ werden jeweils mehrere Ausnehmungen 6 in einem Ensemble so angeordnet, dass benachbarte Ausnehmungen 6 nicht durch einfaches lineares translatorisches Verschieben zur Deckung gebracht werden können. Die einzelnen Ausnehmungen 6 können dabei unterschiedliche Grundrisse aufweisen oder sie können gleiche Grundrisse besitzen, die eine Richtung aufweisen und in unterschiedlichen Ausrichtungen angeordnet sind.

Ein Beispiel für einen komplexen Grundriss ist eine Kamm- oder Gabelstruktur mit spitz auslaufenden Kamm- bzw. Gabelzähnen. Eine erste, das Grundprinzip eines Kammes beinhaltende Ausnehmung mit einem komplexen Grundriss ist in Figur 7a veranschaulicht. Der Grundriss hat die Gestalt eines Wappentiers. Er besitzt eine Hauptfläche 7 - den Rumpf des angedeuteten Wappentiers - mit im Verhältnis zur Fläche kurzer Randkontur sowie mehrere davon ausgehende exponierte Teilflächen 8 - die Flügel, die davon ausgehenden Federn sowie die Füße - mit im Verhältnis zur Fläche langer Randkontur.

Das Verhältnis einer Randkontur zur Fläche wird dabei als umso kürzer bezeichnet, je mehr sich das Verhältnis der Länge der Randlinie 16, welche die Randkontur beschreibt, zu der durch die Randkontur umfassten Fläche dem Verhältnis der Länge der Randlinie eines Kreises gleichen Flächeninhaltes zu dessen Fläche annähert. Das Verhältnis einer Randkontur zur Fläche wird als umso länger bezeichnet, je größer das Verhältnis der Länge der die Randkontur beschreibenden Randlinie 16 zu der durch die Randkontur umfassten Fläche gegenüber dem Verhältnis der Länge der Randlinie eines Quadrates gleichen Flächeninhalts zu dessen Fläche ist. Als durch eine Randkontur umfasste Fläche wird dabei die Fläche zugrundegelegt, die bei - virtueller - Vervollständigung der Randkontur zu einer geschlossenen Randlinie entlang der - virtuellen - Grenzlinie zwischen aneinandergrenzenden Teilflächen entsteht. Lange Randkonturen in diesem Sinne weisen z.B. die buchstabenartigen Ausnehmungen in Fig. 7c oder die sternförmigen Ausnehmungen 6 in Fig. 7d auf. Kurze oder zumindest kürzere Randkonturen im vorgenannten Sinne besitzen z.B. die Ausnehmungen 6.1, 6.2, 6.3 gemäß Fig. 7b.

Die exponierten Teilflächen 8 sind nur über kurze virtuelle Grenzlinien mit der Hauptfläche 7 verbunden. Einige der exponierten Teilflächen 8 sind so gestaltet, dass sie einen Bereich der Verbindungsfolie 3 teilweise umschließen, so dass gefangene Flächen 9 entstehen. Die exponierten Teilflächen 8 sind dabei fjordartig gestaltet und die gefangenen Fläche 9 liegen nach Art von Landzungen zwischen den exponierten Teilflächen 8. Ein Teil der exponierten Teilflächen 8 läuft in eine Spitze 19 aus.

Charakteristisch für Ausnehmungen 6 mit komplexem Grundriss ist, dass der Grundriss in der Regel zumindest einen großflächigen Bereich - die Hauptfläche 7 - mit im Verhältnis zur Fläche kurzer Randkontur aufweist. Die Hauptfläche 7 dient zur Ausbildung einer gleichförmigen Verbindung. Weiter weist ein komplexer Grundriss mindestens eine exponierte Teilfläche 8 auf, die als schmaler Teilbereich mit im Verhältnis zur Fläche langer Randkontur ausgeführt ist.

Die exponierte Teilfläche 8 ist nur über eine kurze virtuelle Grenzlinie mit der Hauptfläche 7 verbunden. Sie ist zweckmäßig so angeordnet, dass sie zusammen mit einer anderen exponierten Teilfläche 8 oder der Hauptfläche 7 einen Teilbereich der Verbindungsfolie 3 umfaßt, so dass zwischen beiden eine gefangene Fläche 9 entsteht, die nur über eine schmalen Materialbrücke17 mit der Hauptteil der Verbindungsfolie 3 verbunden ist. Vorzugsweise ist zudem wenigstens eine exponierte Teilfläche 8 so gestaltet, dass er in einer Spitze 19 ausläuft. Die gefangenen Flächen 9 tragen nur in reduzierter Form zu der durch die Verbindungsfolie 3 erzeugten Befestigungswirkung bei.

Sind mehrere Ausnehmungen 6 in einem Ensemble angeordnet, können die einzelnen Ausnehmungen 6 einfachere geometrische Grundformen besitzen, die eindeutige Hauptflächen und exponierte Teilflächen nicht aufweisen, die aber in einer Ebene unterschiedliche eindeutige Ausrichtungen zulassen, wie etwa Ellipsen, Trapeze oder Dreiecke. Alle Ausnehmungen 6 können dabei grundsätzlich den gleichen Grundriss besitzen. Oder jeweils einen Teil eines Ensembles weist gleiche Grundrisse auf oder alle Grundrisse sind voneinander verschieden. Zweckmäßig besitzen im Ensemble angeordnete Ausnehmungen 6 Grundrisse, die bezüglich keiner Achse oder höchstens bezüglich einer Achse symmetrisch sind, z.B. Kreissegmente, Sichelformen oder Pfeilformen.

Fig. 7b, Fig. 7c und Fig.7d zeigen Beispiele für Ausnehmungs-Ensembles, in denen jeweils mehrere Ausnehmungen 6 ein Ensemble bilden, in dem jeweils benachbarte Ausnehmungen 6 nicht deckungsgleich angeordnet sind in dem Sinne, dass sie nicht deckungsgleich wären, wenn sie ohne Änderung ihrer Ausrichtung in Übereinanderlage gebracht würden.

In der in Fig. 7b dargestellten Gestaltungsvariante bestehen die Ausnehmungen 6 aus Ellipsen, die in einer zweireihigen Matrix angeordnet sind. Die Längsachsen jeweils zweier benachbarter elliptischer Ausnehmungen 6.1 und 6.2 sind jeweils rechtwinklig verdreht zueinander ausgerichtet.

Fig. 7c zeigt eine Ausgestaltungsvariante, in der die einzelnen Ausnehmungen 6 Buchstaben darstellen. Die Grundrisse mancher Buchstaben, etwa eines Es, basieren auf der Grundform eines Kammes, in der eine erste Teilfläche als Hauptfläche 7 angesehen werden kann, von der zwei oder mehr längliche exponierte Teilflächen 8 ausgehen, wobei zwischen den exponierten Teilflächen 8 nach Art von Zwischenstegen Teilbereiche der Verbindungsfolie liegen. Ein Buchstabe - das G - bildet eine gefangene Fläche 9 aus, die nur über eine schmale Materialbrücke 17 mit dem Hauptteil der Verbindungsfolie 3 verbunden ist. Ebenso entstehen zwischen einzelnen Buchstaben schmale Materialstege, die grundsätzlich die gleiche Wirkung haben wie die Materialbrücken 17. Die über die Materialbrücken 17 bzw. Materialstege verbundenen Teile der Verbindungsfolie 3 tragen nur in reduzierter Form zu der durch die Verbindungsfolie 3 erzeugten Befestigungswirkung bei. Alle buchstabenförmigen Ausnehmungen 6 weisen eine im Verhältnis zu ihrer Fläche lange Randkontur auf.

Fig. 7d zeigt eine Ausgestaltungsvariante, in der Ausnehmungen 6 mit verschiedenen komplexen Grundrissen in einer Reihe abwechselnd nebeneinander angeordnet sind. Die Ausnehmungen 6 haben in dem Beispiel die Formen von Winkeln und Sternen. Ein Teil der Ausnehmungen 6, in Fig. 7d die sternförmigen Ausnehmungen, ist so nahe aneinander plaziert, dass zwischen den Ausnehmungen 6 schmale, komplex geformte Materialstege 17 in der Verbindungsfolie 3 entstehen, die wiederum nur in reduzierter Form zu der durch die Verbindungsfolie 3 erzeugten Befestigungswirkung beitragen.

Ein kontrolliertes Trennen eines Verbundes von Kunststoffschichten 1, 2 mit einer Verbindungsfolie 3, in dem eine Ausnehmung 6 mit komplexem Grundriss oder ein Ensemble von Ausnehmungen 6 wie vorstehend beschrieben angelegt ist, derart, dass glatte, saubere Trennflächen entstehen, ist kaum möglich. Wird zum Beispiel, wie in Fig. 8 angedeutet, versucht mit einem Werkzeug 31 eine der Kunststoffschichten 1, 2 von der Verbindungsfolie 3 zu trennen, indem das Werkzeug 31 an der Randlinie angesetzt wird, kommt es zu unvorhersehbaren Materialabrissen. Dabei können sowohl die Verbindungsfolie 3 wie die Kunststoffschichten 1, 2 reißen oder einreißen. Das abgerissene Material verbleibt an der jeweils anderen Schicht. Die getrennten Teile sind anschließend nicht wieder rekombinierbar.

Besitzt eine Datenseite zudem zumindest eine individuell gestaltete Ausnehmung 6, etwa in Form einer fortlaufenden Seriennummer, ist es darüberhinaus auch aus diesem Grund nicht möglich die getrennten Teile anschließend wieder zu rekombinieren.

Die Ausnehmungen 6 werden zweckmäßig durch Schneiden hergestellt, besonders zweckmäßig durch einen feinen Schnitt mit einem Schnittspalt von 30 bis 300µm. Die Schnitte können nicht geschlossene oder auch geschlossene Hüllkurven aufweisen. Auf diese Weise lassen sich beispielsweise eine Matrix aus feine Polygon- oder Wellenlinien herstellen oder Freiformen wie Kreise oder Ovale. Die Ausnehmungen 6 besitzen zweckmäßig größte Durchmesser von 3 bis 30 mm, besonders zweckmäßig von 5 bis 20 mm; vergleichbare Dimensionen empfehlen sich für die Längen von Hüllkurven, etwa von Wellenlinien.

Die Ausnehmungen 6 sind vorzugsweise so in der Verbindungsfolie 3 angelegt, dass sie vollständig in dem Überlappungsbereich 5 liegen. D.h. an der fertigen Datenseite 10 sind die Ausnehmungen 6 in der Regel mit bloßem Auge nicht wahrnehmbar. Ohne weiteres ist es aber auch möglich, dass ein Teil der Ausnehmungen 6 gezielt über die Randlinie 20 hinaus und in den Befestigungsbereich 4 hineinragt. Der dann mit bloßem Auge sichtbare Teil der Ausnehmungen 6 bildet ein Echtheitsmerkmal für die Datenseite 10.

Vorgesehen sein kann ferner, dass in dem Überlappungsbereich 5 die Kunststoffschichten 1, 2 aus einem transparenten Material bestehen. In diesem Fall sind die Ausnehmungen 6 durch die Kunststoffschichten 1, 2 hindurch ebenfalls mit dem bloßen Auge wahrnehmbar. Die Ausnehmungen 6 bilden dann ebenfalls ein - leicht wahrnehmbares - Echtheitsmerkmal für die Datenseite.

Zweckmäßig sind die Ausnehmungen 6 so angeordnet, dass ihre Mittel- oder Schwerpunkte eine Matrix aus Reihen und Zeilen bilden. Zumindest eine Ausnehmung 6, typischerweise die erste Reihe einer Matrix im vorgenannten Sinne, ist in unmittelbarer Nähe zu der Randlinie 20 plaziert. Sofern alle Ausnehmungen 6 innerhalb des Überlappungsbereiches 5 liegen, sind die der Randlinie 20 am nächsten liegenden Punkte der Ausnehmungen 6 zweckmäßig 1 bis 10 mm von der Randlinie 20 entfernt. Die Abstände zwischen jeweils zwei Ausnehmungen 6 entsprechen zweckmäßig den Dimensionen der Ausnehmungen 6. Kleinere oder größere Abstände sind aber ohne weiteres möglich. Ohne weiteres können ferner Ausnehmungen 6 mit unterschiedlichen Grundrissen miteinander kombiniert werden. Beispielsweise können in einer Reihe Ausnehmungen in Gestalt eines Wappens, eines Logos oder eines Symbols und in der anderen Reihe im Ensemble zusammenwirkende Ausnehmungen angeordnet werden.

Zur Herstellung einer Datenseite 10 werden die Kunststoffschichten und die Verbindungsfolie 3 bereitgestellt. In der Verbindungsfolie 3 werden durch Lasern und/oder durch Stanzen, Wasserstrahlschneiden, Heißnadelperforation, Plasmaperforation oder anderen Trenntechniken im Überlappungsbereich 5 die Ausnehmungen 6 angelegt. Vor dem Anlegen der Ausnehmungen 6 oder ggf. auch anschließend wird die Verbindungsfolie 3 mit der Beschichtung 14 versehen, z.B. in einem Tauchbad. Die so vorbereitete Verbindungsfolie 3 und die Kunststoffschichten 1, 2 werden anschließend übereinander ausgerichtet und miteinander verbunden. Das Verbinden geschieht vorzugsweise durch Laminieren.

Figur 9 zeigt in vereinfachter Form eine Anlage zum Zuschneiden und Einschneiden von Verbindungsfolien 3. Die Anlage umfasst eine Spenderrolle 21, die mit Rohmaterial 22 für die Verbindungsfolien 3 beladen ist. Das Rohmaterial 22 ist mit Markierungen 23 für die nachfolgende Bearbeitung bedruckt. Soweit die fertigen Verbindungsfolien 3 einen Designdruck tragen sollen, ist auch dieser bereits aufgebracht. Ferner ist das Rohmaterial 22 zweckmäßig bereits mit der Beschichtung 14,15 versehen. Der Spenderrolle 21 nachgeordnet ist eine Zuführeinrichtung 24, in Figur 6 angedeutet in Form von zwei Umlenkwalzen.

Über die Zuführeinrichtung 24 wird das Rohmaterial 22 in eine Bearbeitungszone 25 geführt. In der Bearbeitungszone 25 ist ein Laser 26 plaziert. Der Laser 26 kann mehrere Einzellaser umfassen. Ferner ist in der Bearbeitungszone 25 eine Kamera 27 angeordnet, die mit dem Laser 26 gekoppelt ist. Die Kamera 27 erlaubt das Erkennen der Markierungen 23 und dient zur Steuerung des Lasers 26. Zweckmäßig ist die Kamera 27 im Strahlengang des Lasers 26 angeordnet.

Der Laser 26 erzeugt in dem Rohmaterial 22 die für die späteren Verbindungsfolien 3 vorgesehenen Ausnehmungen 6. Desweiteren teilt der Laser das Rohmaterial 22 in Streifen 28. Die Streifen 28 haben die Breite der späteren Verbindungsfolien 3.

Über eine Wegführeinrichtung 29, wiederum angedeutet durch zwei Umlenkwalzen, wird das in Streifen 28 geschnittene und mit Ausnehmungen 6 versehene Halbzeug auf eine Lagervorrichtung 30 geführt. Zweckmäßig besteht die Lagervorrichtung 30 aus einer der Anzahl der Streifen 28 entsprechenden Zahl von Lagerrollen.

In einer Variante ist es möglich, der Anlage das Rohmaterial 22 unmittelbar in der später benötigten Breite der Verbindungsfolie 3 zuzuführen. Entsprechend sind dann zweckmäßig statt einer relativ breiten mehrere schmale Spenderrollen 21 vorgesehen und werden mehrere Verbindungsfolien 3 parallel durch die Anlage geführt werden und durch den Laser 26 mit Ausnehmungen 6 versehen.

Unter Berücksichtigung des grundlegenden Gedankens ist eine Vielzahl von weiteren, nicht im einzelnen beschriebenen Ausgestaltungen der Erfindung möglich. Das gilt etwa für die Formgebung der Ausnehmungen 6. Unter anderem ist es z.B. möglich, die Ausnehmungen 6 in einer Schräglage einzubringen, so dass ihre Innenränder zur Oberfläche der Datenseite 10 gekippt sind. Spielraum besteht auch hinsichtlich der verwendeten Materialien. Insbesondere kann hier eine Abstimmung der eingesetzten Materialien zu Erreichung eines bestimmten Zweckes erfolgen, beispielsweise zu Erreichung eines bestimmten optischen Effekts. Lediglich beispielhaft ist weiter die vorgeschlagene Beschneidungsanlage. Selbstständig können hier auch andere Anlagen und Techniken zur Anwendung kommen. Die beschriebenen Ausführungsbeispiele können zudem in vielfältiger Weise kombiniert werden, insbesondere gilt dies für die verschiedenen Gestaltungsvarianten in Figur 7.

**Bezugszeichenliste**

| | | | |
|---|---|---|---|
| 1. | Kunststoffschicht | 17. | Materialbrücke |
| 2. | Kunststoffschicht | 18. | Innenendlinie |
| 3. | Befestigungsstreifen | 19. | Spitze |
| 4. | Befestigungsbereich | 20. | Seitenrandlinie |
| 5. | Überlappungsbereich | 21. | Spenderrolle |
| 6. | Ausnehmung (auch 6.1, 6.2) | 22. | Rohmaterial |
| 7. | Hauptfläche | 23. | Markierungen |
| 8. | exponierte Teilflächen | 24. | Zuführeinrichtung |
| 9. | Gefangene Fläche | 25. | Bearbeitungszone |
| 10. | Datenseite | 26. | Laser |
| 11. | Textilschicht | 27. | Kamera |
| 12. | Gewebe | 28. | Streifen |
| 13. | Maschenöffnungen | 29. | Wegführeinrichtung |
| 14. | Beschichtung | 30. | Lagereinrichtung |
| 15. | Zapfen/Steg | 31. | Werkzeug |
| 16. | Randlinie | 32. | Konturbahn |

## Patentansprüche

1. Datenseite bestehend aus wenigstens zwei Kunststoffschichten (1, 2) und einer vorspringenden flexiblen laminierbaren Verbindungsfolie (3) zur Befestigung an einem Halter, insbesondere einem Passbuch, wobei ein Teil der flexiblen laminierbaren Verbindungsfolie (3) mit den Kunststoffschichten überlappt und in dem Überlappungsbereich (5) Ausnehmungen (6) ausgebildet sind, mittels derer die flexible laminierbare Verbindungsfolie (3) mit mindestens einer der Kunststoffschichten (1, 2) dauerhaft verbunden ist, indem das Kunststoffmaterial der Kunststoffschichten (1, 2) durch die Ausnehmungen (6) hindurch verbunden ist, **dadurch gekennzeichnet, dass**
- zumindest eine Ausnehmung (6) auf der Randlinie (20) angeordnet ist, an der die flexible laminierbare Verbindungsfolie (3) aus der Datenseite (10) hervorspringt, oder nahe der Randlinie (20), so daß die der Randlinie (20) am nächsten liegenden Punkte der Ausnehmung (6) 1 bis 10 mm von der Randlinie (20) entfernt sind, und zumindest eine Ausnehmung (6) einen komplexen Grundriss besitzt, dessen Randkontur zumindest teilweise durch einen Polygonzug und/ oder durch aufeinanderfolgende Kurvenabschnitte mit unterschiedlichen Kurvenparametern beschrieben wird, der eine Hauptfläche (7) mit im Verhältnis zu ihrer Fläche kurzer Randkontur und wenigstens eine mit der Hauptfläche (7) verbundene exponierte Teilfläche (8) mit im Verhältnis zu ihrer Fläche langer Randkontur aufweist, wobei das Verhältnis einer Randkontur zu ihrer Fläche umso kürzer ist, je mehr sich das Verhältnis der Länge der Randlinie (16), welche die Randkontur beschreibt, zu der durch die Randkontur umfassten Fläche dem Verhältnis der Länge der Randlinie eines Kreises gleichen Flächeninhaltes zu dessen Fläche annähert, und umso länger, je größer das Verhältnis der Länge der die Randkontur beschreibenden Randlinie (16) zu der durch die Randkontur umfassten Fläche gegenüber dem Verhältnis der Länge der Randlinie eines Quadrates gleichen Flächeninhalts zu dessen Fläche ist,
- oder zumindest zwei benachbarte Ausnehmungen (6.1, 6.2, 6.3) so ausgebildet sind, dass ihre Grundrisse nicht durch lineares translatorisches Verschieben zur Deckung gebracht werden können.

2. Datenseite nach Anspruch 1, **dadurch gekennzeichnet, dass** zumindest eine Ausnehmung (6) einen nichtachsensymmetrischen Grundriss aufweist.

3. Datenseite nach einem der vorhergehenden Ansprüche, **dadurch gekennzeichnet, dass** zumindest eine Ausnehmung (6) einen Bereich der Verbindungsfolie (3) so umschließt, dass eine gefangene Fläche (9) entsteht, die nur über eine Materialbrücke (17) mit dem Hauptteil der Verbindungsfolie (3) verbunden ist.

4. Datenseite nach einem der vorhergehenden Ansprüche, **dadurch gekennzeichnet, dass** zumindest eine Ausnehmung (6) einen Grundriss aufweist, der ein Symbol, ein Logo oder ein alphanumerisches Zeichen darstellt.

5. Datenseite nach einem der vorhergehenden Ansprüche, **dadurch gekennzeichnet, dass** zumindest eine Ausnehmung (6) einen in einer Spitze (19) auslaufenden Bereich aufweist.

6. Datenseite nach einem der vorhergehenden Ansprüche, **dadurch gekennzeichnet, dass** sie eine Mehrzahl von Ausnehmungen aufweist, die Ausnehmungen (6) in einer Matrix aus Reihen und Zeilen angeordnet sind.

7. Datenseite nach einem der vorhergehenden Ansprüche, **dadurch gekennzeichnet, dass** die flexible laminierbare Verbindungsfolie (3) aus einer Kernschicht (11) besteht, die auf einer oder beiden Seiten mit einer Beschichtung (14) versehen ist.

8. Datenseite nach Anspruch 7, **dadurch gekennzeichnet, dass** die Kernschicht (11) eine Textilschicht umfaßt, deren Maschenöffnungen (13) durch die Beschichtung (14) verschlossen sind.

9. Datenseite nach einem der vorhergehenden Ansprüche, **dadurch gekennzeichnet, dass** die flexible laminierbare Verbindungsfolie (3) ein Gewichtsverhältnis von Textilschicht (11) zu Beschichtung (14) im Trockengewicht von 70:30 bis 50:50 aufweist, vorzugsweise von 60:40 bis 50:50, besonders bevorzugt von 60:40.

10. Verfahren zum Herstellen einer flexiblen laminierbaren Verbindungsfolie (3) für eine Datenseite mit allen Merkmalen des Anspruchs 1, die mechanisch an einem Halter befestigbar ist und wobei die Verbindungsfolie Ausnehmungen (6) aufweist, wobei die Ausnehmungen (6) dieselben Merkmale besitzen wie die Ausnehmungen (6) des Anspruchs 1, wobei beim Laminieren Folienmaterial durch die Ausnehmungen (6) einer gegenlaminierten Folie hindurchtreten kann, mit folgenden Schritten:
- Bereitstellen eines Gewebes (12),
- Bereitstellen eines Mantelmaterials, dem ein Laseradditiv beigemischt ist, das Laserenergie in erhöhtem Maße einkoppelt,
- Beschichten des Gewebes (12) mit dem Mantelmaterial,
- Lasern des beschichteten Gewebes (12) entlang einer eine Ausnehmung (6) umfassenden Randlinie (16), wobei das gelaserte Gewebe (12) entlang der Randlinie (16) durchtrennt wird.

11. Verfahren nach Anspruch 10, **dadurch gekennzeichnet, dass** das Gewebe (12) eine Dicke von 50 bis 120 µm und eine Maschenweite von 20 bis 80 µm aufweist.

12. Verfahren nach Anspruch 10, **dadurch gekennzeichnet, dass** das Gewebe PET oder ein technischer Kunststoff aus der Gruppe PA, PEEK, PES, PSU ist und das Mantelmaterial Polyurethan.

13. Verfahren nach Anspruch 10 **dadurch gekennzeichnet, dass** das Gewebe (12) chemisch oder physikalisch vorbehandelt wird.

14. Verfahren nach Anspruch 10, **dadurch gekennzeichnet, dass** dem Mantelmaterial als Laseradditiv Kupfermolybdän mit einer Konzentration von 0,1% bis 2,5%, vorzugsweise von 0,25 bis 0,5 % zugesetzt ist.

15. Verfahren nach Anspruch 10, **dadurch gekennzeichnet, dass** das Beschichten in einem Tauchbad erfolgt.

16. Verfahren nach Anspruch 15, **dadurch gekennzeichnet, dass** das Gewebe (12) in dem Tauchbad bei Raumtemperatur mit Mantelmaterial mit einer Dicke von 1 µm bis 10 µm beschichtet wird.

17. Verfahren nach Anspruch 10, **dadurch gekennzeichnet, dass** durch das Mantelmaterial die Maschenöffnungen (13) des Gewebes (12) geschlossen werden.

18. Laminierbare flexible Verbindungsfolie für eine Datenseite mit allen Merkmalen des Anspruchs 1, die mechanisch an einem Halter befestigbar ist, **dadurch gekennzeichnet, daß**
sie aus einem Gewebe (12) besteht,
- welches eine aus einem Mantelmaterial gebildete Beschichtung (14) aufweist, der ein die Einkopplung von Laserenergie unterstützendes Laseradditiv beigemischt ist, und
- welches Ausnehmungen (6) aufweist, wobei die Ausnehmungen (6) dieselben Merkmale besitzen wie die Ausnehmungen (6) des Anspruchs 1, wobei beim Laminieren Folienmaterial durch die Ausnehmungen (6) zu einer gegenlaminierten Folie hindurchtritt, so daß zwischen beiden eine Verbindung (15) in Form von Zapfen oder Stegen entsteht.

19. Verfahren zur Herstellung einer Datenseite mit folgenden Schritten:
- Bereitstellen mindestens zweier Kunststoffschichten (1, 2),
- Bereitstellen einer flexiblen laminierbaren Verbindungsfolie (3),
- Anordnen der Kunststoffschichten (1, 2) und der flexiblen laminierbaren Verbindungsfolie (3) so, dass die flexible laminierbare Verbindungsfolie (3) teilweise mit den Kunststoffschichten (1, 2) zu einem Überlappungsbereich (5) überlappt und teilweise vorspringt,
- Verbinden der Kunststoffschichten (1, 2) und der flexiblen laminierbaren Verbindungsfolie (3), so dass sich das Kunststoffmaterial der Kunststoffschichten (1, 2) durch die Ausnehmungen (6) hindurch verbindet,
**dadurch gekennzeichnet, dass**
- vor dem Verbinden in der flexiblen laminierbaren Verbindungsfolie (3) im Überlappungsbereich (5) und nahe der Randlinie (20), an der die Verbindungsfolie (3) aus der Datenseite (10) hervorspringt, durch Lasern und/ oder Stanzen zumindest eine Ausnehmung (6) mit einen komplexen Grundriss angelegt wird, dessen Randkontur zumindest teilweise durch einen Polygonzug und/ oder durch aufeinanderfolgende Kurvenabschnitte mit unterschiedlichen Kurvenparametern beschrieben wird, wobei der Grundriß eine Hauptfläche (7) mit im Verhältnis zu ihrer Fläche kurzer Randkontur und wenigstens eine mit der Hauptfläche (7) verbundene exponierte Teilfläche (8) mit im Verhältnis zu ihrer Fläche langer Randkontur aufweist, wobei das Verhältnis einer Randkontur zu ihrer Fläche umso kürzer ist, je mehr sich das Verhältnis der Länge der Randlinie (16), welche die Randkontur beschreibt, zu der durch die Randkontur umfassten Fläche dem Verhältnis der Länge der Randlinie eines Kreises gleichen Flächeninhaltes zu dessen Fläche annähert, und umso länger, je größer das Verhältnis der Länge der die Randkontur beschreibenden Randlinie (16) zu der durch die Randkontur umfassten Fläche gegenüber dem Verhältnis der Länge der Randlinie eines Quadrates gleichen Flächeninhalts zu dessen Fläche ist, und wobei die der Randlinie (20) am nächsten liegenden Punkte der Ausnehmung (6) 1 bis 10 mm von der Randlinie (20) entfernt sind,
- oder zumindest zwei benachbarte Ausnehmungen (6) so angelegt werden, dass ihre Grundrisse nicht durch lineares translatorisches Verschieben zur Deckung gebracht werden können.

## Claims

1. A data page consisting of at least two plastic layers (1, 2) and a projecting flexible laminatable connecting foil (3) for fastening to a holder, in particular a passport booklet, wherein a portion of the flexible laminatable connecting foil (3) overlaps with the plastic layers, and in the overlap region (5) recesses (6) are formed, by means of which the flexible laminatable connecting foil (3) is permanently connected to at least one of the plastic layers (1, 2) through the plastic material of the plastic layers (1,2) being connected through the recesses (6), **characterized in that**
- at least one recess (6) is arranged on the edge line (20) on which the flexible laminatable connecting foil (3) projects from the data page (10), or near the edge line (20), so that the points of the recess (6) disposed most closely to the edge line (20) are spaced from the edge line (20) by 1 to 10 mm, and at least one recess (6) has a complex layout, the edge contour of which is described at least partially by a polygonal chain and/or consecutive curve sections with different curve parameters, said layout having a main area (7) with an edge contour that is short in relation to its area and at least one exposed partial area (8) which is connected to the main area (7) and has an edge contour that is long in relation to its area, wherein the relation of an edge contour to its area is the shorter the more the relation of the length of the edge line (16) describing the edge contour to the area encompassed by the edge contour approximates the relation of the length of the edge line of a circle of equal surface area to the area of the same, and the longer, the larger the relation of the length of the edge line (16) describing the edge contour to the area encompassed by the edge contour is to the relation of the length of the edge line of a square of the same surface area to the area of the same,
- or at least two adjacent recesses (6.1, 6.2, 6.3) are configured so that their layouts cannot be brought into congruence by linear, translatory displacement.

2. The data page according to claim 1, **characterized in that** at least one recess (6) has a non-axis-symmetric layout.

3. The data page according to any of the preceding claims, **characterized in that** at least one recess (6) so encompasses a region of the connecting foil (3) that a trapped area (9) is formed which is connected to the main portion of the connecting foil (3) only via a material bridge (17).

4. The data page according to any of the preceding claims, **characterized in that** at least one recess (6) has a layout which represents a symbol, a logo or an alphanumeric character.

5. The data page according to any of the preceding claims, **characterized in that** at least one recess (6) has a region that is tapered to a tip (19).

6. The data page according to any of the preceding claims, **characterized in that** it has a plurality of recesses which are allocated to recesses (6) in a matrix of rows and columns.

7. The data page according to any of the preceding claims, **characterized in that** the flexible laminatable connecting foil (3) consists of a core layer (11) which is equipped with a coating (14) on one or both sides.

8. The data page according to claim 7, **characterized in that** the core layer (11) comprises a textile layer, the mesh openings (13) of which are closed by the coating (14).

9. The data page according to any of the preceding claims, **characterized in that** the flexible laminatable connecting foil (3) has a weight ratio of the textile layer (11) to the coating (14) in the dry weight of 70:30 to 50:50, preferably of 60:40 to 50:50, particularly preferably of 60:40.

10. A method for producing a flexible laminatable connecting foil (3) for a data page with all features of claim 1, which can be fastened mechanically to a holder and wherein the connecting foil has recesses (6), wherein the recesses (6) have the same features as the recesses (6) of claim 1, wherein during lamination foil material can penetrate through the recesses (6) of a counter-laminated foil, with the following steps of:
- making available a fabric (12),
- making available a sheathing material to which a laser additive is admixed which couples in laser energy to an increased extent,
- coating the fabric (12) with the sheathing material,
- lasering the coated fabric (12) along an edge line (16) encompassing a recess (6), wherein the lasered fabric (12) is severed along the edge line (16).

11. The method according to claim 10, **characterized in that** the fabric (12) has a thickness of 50 to 120 µm and a mesh width of 20 to 80 µm.

12. The method according to claim 10, **characterized in that** the fabric is PET or a technical plastic from the group PA, PEEK, PES, PSU, and the sheathing material is polyurethane.

13. The method according to claim 10, **characterized in that** the fabric (12) is chemically or physically pretreated.

14. The method according to claim 10, **characterized in that** to the sheathing material copper molybdenum with a concentration of 0.1% to 2.5%, preferably of 0.25 to 0.5%, is added as a laser additive.

15. The method according to claim 10, **characterized in that** coating is effected in an immersion bath.

16. The method according to claim 15, **characterized in that** the fabric (12) is coated in the immersion bath at room temperature with sheathing material of a thickness of 1 µm to 10 µm.

17. The method according to claim 10, **characterized in that** the mesh openings (13) of the fabric (12) are closed by the sheathing material.

18. A laminatable flexible connecting foil for a data page with all features of claim 1, which can be fastened mechanically to a holder, **characterized in that** it consists of a fabric (12),
- which has a coating (14) formed of a sheathing material (14) to which a laser additive is admixed that supports the coupling in of laser energy, and
- which has recesses (6), wherein the recesses (6) have the same features as the recesses (6) of claim 1, wherein during lamination foil material penetrates through the recesses (6) to a counter-laminated foil, so that between the two foils a connection (15) is created in the form of pins or webs.

19. A method for producing a data page with the following steps of:
- making available at least two plastic layers (1, 2),
- making available a flexible laminatable connecting foil (3),
- arranging the plastic layers (1, 2) and the flexible laminatable connecting foil (3) so that the flexible laminatable connecting foil (3) partially overlaps with the plastic layers (1, 2) to form an overlap region (5) and partially projects therefrom,
- connecting the plastic layers (1, 2) and the flexible laminatable connecting foil (3), so that the plastic material of the plastic layers (1, 2) bonds through the recesses (6),
**characterized in that**
- before the connecting in the flexible laminatable connecting foil (3) in the overlap region (5) and near the edge line (20) at which the connecting foil (3) projects from the data page (10), at least one recess (6) having a complex layout is created by lasering and/or punching, the edge contour of which is described at least partially by a polygonal chain and/or consecutive curve sections with different curve parameters, wherein the layout has a main area (7) with an edge contour that is short in relation to its area and at least one exposed partial area (8) which is connected to the main area (7) and has an edge contour that is long in relation to its area, wherein the relation of an edge contour to its area is the shorter the more the relation of the length of the edge line (16) describing the edge contour to the area encompassed by the edge contour approximates the relation of the length of the edge line of a circle of equal surface area to the area of the same, and the longer, the larger the relation of the length of the edge line (16) describing the edge contour to the area encompassed by the edge contour is to the relation of the length of the edge line of a square of the same surface area to the area of the same, and wherein the points of the recess (6) disposed most closely to the edge line (20) are spaced from the edge line (20) by 1 to 10 mm,
- or at least two adjacent recesses (6) are created such that their layouts cannot be brought into congruence by linear, translatory displacement.

## Revendications

1. Page de données consistant en au moins deux couches en matière plastique (1, 2) et en un film de jonction (3) flexible laminable faisant saillie pour la fixation à un support, en particulier à un passeport, cependant qu'une partie du film de jonction (3) flexible laminable faisant saillie se chevauche avec les couches en matière plastique, et que, dans la zone de chevauchement (5), des évidements (6) sont réalisés, au moyen desquels le film de jonction (3) flexible laminable est joint durablement à au moins une des couches en matière plastique (1, 2), ce qui est obtenu par le fait que le matériau en matière plastique des couches en matière plastique (1, 2) est joint à travers les évidements (6), **caractérisé en ce que**
- au moins un évidement (6) est agencé sur la ligne de bordure (20) à laquelle le film de jonction (3) flexible laminable fait saillie par rapport à la page de données (10), ou près de de la ligne de bordure (20), de telle façon que les points de l'évidement (6) les plus proches de la ligne de bordure (20) sont éloignés de 1 à 10 mm de la ligne de bordure (20) et qu'au moins un évidement (6) a un plan complexe dont le contour de bordure est décrit au moins partiellement par un tracé polygonal et/ou par des segments de courbe consécutifs dont les paramètres de courbe sont différents, ledit plan ayant une surface principale (7) présentant un contour de bordure court par rapport à sa surface et au moins une surface partielle (8) exposée qui est jointe à la surface principale (7) et qui présente un contour de bordure long par rapport à sa surface,
cependant que le rapport entre un contour de bordure et sa surface est d'autant plus court que le rapport entre la longueur de la ligne de bordure (16), décrivant le contour de bordure, et la surface incluse à l'intérieur du contour de bordure se rapproche du rapport entre la longueur de la ligne de bordure d'un cercle de même superficie et sa surface, et est d'autant plus long que le rapport entre la longueur de la ligne de bordure (16), décrivant le contour de bordure, et la surface incluse à l'intérieur du contour de bordure est grand en comparaison avec le rapport entre la longueur de la ligne de bordure d'un carré de même superficie et sa surface,
- ou bien qu'au moins deux évidements (6.1, 6.2, 6.3) sont réalisés de telle façon que leurs plans ne peuvent pas, par déplacement linéaire en translation, être mis en coïncidence.

2. Page de données selon la revendication 1, **caractérisé en ce qu'**au moins un évidement (6) présente un plan qui n'est pas en symétrie axiale.

3. Page de données selon une des revendications précédentes, **caractérisé en ce qu'**au moins un évidement (6) entoure de telle manière une zone du film de jonction (3) qu'une surface piégée (9) est engendrée, laquelle n'est jointe que par un pont de matière (17) avec la partie principale du film de jonction (3).

4. Page de données selon une des revendications précédentes, **caractérisé en ce qu'**au moins un évidement (6) présente un plan qui représente un symbole, un logo ou un caractère alphanumérique.

5. Page de données selon une des revendications précédentes, **caractérisé en ce qu'**au moins un évidement (6) comporte une zone se terminant en une pointe (19).

6. Page de données selon une des revendications précédentes, **caractérisé en ce qu'**elle comporte une pluralité d'évidements, et que les évidements (6) sont agencés dans une matrice de rangées et de lignes.

7. Page de données selon une des revendications précédentes, **caractérisé en ce que** le film de jonction (3) flexible laminable consiste en une couche noyau (11) qui, d'un ou des deux côtés, est pourvue d'un revêtement (14).

8. Page de données selon la revendication 7, **caractérisé en ce que** la couche noyau (11) comprend une couche textile dont les ouvertures des mailles (13) sont fermées par le revêtement (14).

9. Page de données selon une des revendications précédentes, **caractérisé en ce que**, dans le film de jonction (3) flexible laminable, le rapport pondéral entre la couche textile (11) et le revêtement (14) se situe, en poids sec, entre 70:30 et 50.50, de préférence entre 60:40 et 50.50, et est particulièrement de préférence de 60:40.

10. Procédé de fabrication d'un film de jonction (3) flexible laminable destiné à une page de données possédant toutes les caractéristiques de la revendication 1, qui peut être fixé mécaniquement à un support, cependant que le film de jonction comporte des évidements (6), cependant que les évidements (6) possèdent les mêmes caractéristiques que les évidements (6) de la revendication 1, cependant que, lors du laminage, du matériau du film peut passer à travers les évidements (6) d'un film laminé contre eux, comprenant les étapes suivantes :
- mise à disposition d'un tissu (12),
- mise à disposition d'un matériau de gainage additionné d'un additif laser qui fait entrer une énergie laser dans une mesure élevée,
- revêtement du tissu (12) avec le matériau de gainage,
- irradiation au laser du tissu (12) pourvu d'un revêtement, le long d'une ligne de bordure (16) englobant un évidement (6), cependant que le tissu (12) irradié au laser est coupé le long de la ligne de bordure (16).

11. Procédé selon la revendication 10, **caractérisé en ce que** le tissu (12) a une épaisseur située entre 50 et 120 µm et une largeur de maille située entre 20 et 80 µm.

12. Procédé selon la revendication 10, **caractérisé en ce que** le tissu (12) consiste en du PET ou en une matière plastique technique du groupe des PA, PEEK, PES, PSU, et que le matériau de gainage consiste en du polyuréthane.

13. Procédé selon la revendication 10, **caractérisé en ce que** le tissu (12) est prétraité chimiquement ou physiquement.

14. Procédé selon la revendication 10, **caractérisé en ce que**, au matériau de gainage, en tant qu'additif laser, c'est du molybdène de cuivre à une concentration située entre 0,1 % et 2,5 %, de préférence entre 0,25 % et 0,5 %, qui est additionné.

15. Procédé selon la revendication 10, **caractérisé en ce que** le revêtement a lieu dans un bain d'immersion.

16. Procédé selon la revendication 15, **caractérisé en ce que** le tissu (12) est pourvu d'un revêtement dans un bain d'immersion à une température ambiante avec un matériau de gainage d'une épaisseur située entre 1 µm et 10 µm.

17. Procédé selon la revendication 10, **caractérisé en ce que**, par le matériau de gainage, les ouvertures des mailles (13) du tissu (12) sont fermées.

18. Film de jonction flexible laminable destiné à une page de données possédant toutes les caractéristiques de la revendication 1, qui peut être fixé mécaniquement à un support, **caractérisé en ce qu'**il
consiste en un tissu (12),
- qui comporte un revêtement (14) constitué par un matériau de gainage et auquel est additionné un additif laser favorisant l'entrée d'énergie laser, et
- qui comporte des évidements (6), cependant que les évidements (6) possèdent les mêmes caractéristiques que les évidements (6) de la revendication 1, cependant que, lors du laminage, du matériau du film passe à travers les évidements (6) vers un film laminé contre eux, de telle sorte que, entre les deux, une jonction (15) sous forme de tenons ou de traverses est engendrée.

19. Procédé de fabrication d'une page de données, comprenant les étapes suivantes :
- mise à disposition d'au moins deux couches en matière plastique (1,2),
- mise à disposition d'un film de jonction (3) flexible laminable,
- agencement des couches en matière plastique (1, 2) et du film de jonction (3) flexible laminable, de telle façon que le film de jonction (3) flexible laminable se chevauche partiellement avec les couches en matière plastique (1, 2) de manière à constituer une zone de chevauchement (5), et fait saillie partiellement,
- jonction des couches en matière plastique (1, 2) et du film de jonction (3) flexible laminable, de telle façon que le matériau en matière plastique des couches en matière plastique (1, 2) vient se joindre à travers les évidements (6),
**caractérisé en ce que**
- avant la jonction, dans le film de jonction (3) flexible laminable, dans la zone de chevauchement (5) et près de la ligne de bordure (20) à laquelle le film de jonction (3) fait saillie par rapport à la page de données (10), par irradiation au laser et/ou par poinçonnage , au moins un évidement (6) ayant un plan complexe est engendré, dont le contour de bordure est décrit au moins partiellement par un tracé polygonal et/ou par des segments de courbe consécutifs dont les paramètres de courbe sont différents, cependant que le plan a une surface principale (7) présentant un contour de bordure court par rapport à sa surface et au moins une surface partielle (8) exposée qui est jointe à la surface principale (7) et qui présente un contour de bordure long par rapport à sa surface,
cependant que le rapport entre un contour de bordure et sa surface est d'autant plus court que le rapport entre la longueur de la ligne de bordure (16), décrivant le contour de bordure, et la surface incluse à l'intérieur du contour de bordure se rapproche du rapport entre la longueur de la ligne de bordure d'un cercle de même superficie et sa surface, et est d'autant plus long que le rapport entre
la longueur de la ligne de bordure (16), décrivant le contour de bordure, et la surface incluse à l'intérieur du contour de bordure est grand en comparaison avec le rapport entre la longueur de la ligne de bordure d'un carré de même superficie et sa surface, et cependant que les points de l'évidement (6) les plus proches de la ligne de bordure (20) sont éloignés de 1 à 10 mm de la ligne de bordure (20),
- ou bien qu'au moins deux évidements (6) avoisinants sont aménagés de telle façon que leurs plans ne peuvent pas, par déplacement linéaire en translation, être mis en coïncidence.
